# EUROPEAN PATENT SPECIFICATION

(11) **EP 2 581 520 B1**
(45) Date of publication and mention of the grant of the patent: **24.07.2019**
(21) Application number: 12169438.4
(22) Date of filing: 25.05.2012
(51) Int. Cl.: E04D 13/10, E06C 1/34, F24S 25/613

(54) **Bracket**
Halterung
Support

(30) Priority: 27.05.2011 DK 201170262
(43) Date of publication of application: 17.04.2013
(73) Proprietor: Gamag ApS, 2770 Kastrup (DK)
(72) Inventor: Gyldborg, Gert, 2770 Kastrup (DK)
(74) Representative: Chas. Hude A/S

(56) References cited:
- WO-A1-2006/123979
- AT-B- 382 413
- CA-A1- 2 621 888
- CH-A- 523 400
- DE-A1- 3 303 306
- DE-U1-202011 003 239
- GB-A- 2 454 948
- JP-U- H 071 137
- JP-U- H0 442 534
- JP-U- H0 662 060
- JP-U- H03 113 035
- JP-U- H04 101 429
- US-A- 591 594
- US-A- 5 669 184
- Z. Marciniak ET AL: "SHEET METAL DESIGN HANDBOOK", , 14 August 2008 (2008-08-14), XP055319638, Retrieved from the Internet: URL:http://www.qualitytool.com/resources/D esign-Handbook-Rev3.pdf [retrieved on 2016-11-15]

## Description

The present invention relates to a bracket made of a plate material for mounting on a roof comprising a fastening means in one end of the body for fastening the bracket to a roof part and a support part in an opposite end of the body, the fastening means comprising a plate element, the plate element being an integrated part of the body and connected to the body along a first side of the plate element, the width of the first side being smaller than the width of the body, the plate element further comprising a second side and a third side extending from the first side as well as a fourth side opposite the first side connecting the second side and the third side.

Solar cells, ladders and snow catchers a typically mounted on roofs using brackets of various designs. The brackets must either be bolted to the roof tiles at the risk of the roof tiles breaking during the mechanical handling or the roof tiles be lifted to enable the brackets to be adequately fastened to the roof.

EP1201844 discloses a snow catcher bracket made of a plate material and having an oblong body with a hook in one end of the body engaging with a roof tile and a support part in an opposite end of the oblong body for catching the snow. The disadvantages of the design of the patent in question is that the hook takes up a lot of space during transportation and that a roof tile must be lifted in order for the hook to be inserted under the overlapping roof tile to engage with the upper edge of roof tile below the lifted roof tile. Not only is this a cumbersome procedure, the entire load is also placed on one roof tile when the snow is caught by the support part. In addition, the support part is bent in a continuation of the oblong body so as to form a triangular shape, seen from the side, in order to be sufficiently strong to support the load of the snow.

JP 2560115 Y discloses a snow catcher bracket comprising a long, narrow plate part with a part protruding from the oblong body. This plate part is used to position the snow catcher bracket in relation to the individual roof tile, the plate part engaging the edge of the roof tile. The snow catcher bracket moreover comprises fastening means in the form of holes in the body, the bracket being screwed onto the roof tiles through the holes. The bracket thus requires holes to be bored in the roof tiles, which in itself is disadvantageous as it may cause leaks, water thus seeping through the roof when the snow thaws. Moreover, the support part for catching the snow is bent in a, seen from the side, L-shaped section, requiring either great strength of the material or subsidiary bracing means to enable the upwardly bent edge to withstand the pressure of the snow. In addition, the entire load is placed on the roof tile to which the snow catcher bracket is fastened.

JP H04 42534 U discloses a bracket according to the preamble of claim 1.

The object of the present invention is to provide a roof bracket that does not have the disadvantages of the known roof brackets, or presents an alternative to these.

This object is achieved by a bracket according to claim 1.

This structure enables the bracket to be mounted on existing roofs without lifting the roof tiles and/or screwing the bracket to the roof tiles, the latter of which may cause leaks. As the plate element of the bracket is bent at a suitable angle V of approximately 20-30 degrees, preferably approximately 25 degrees, in relation to the extension of the body and as the connection between the plate element and the rest of the snow catcher is springy, the part of the body comprising the plate element may be inserted under a roof tile, the element being pushed upwards towards the body until it is substantially on the same level and parallel with the body. When the element has been inserted so far as to be free of the subjacent roof tile, it springs back to its pre-bent position. The bracket is then drawn in a direction opposite the direction of insertion so that the fourth side of the protruding part of the bracket/plate element engages a subjacent batten and penetrates it. The bracket is thus securely fastened and the load is placed on the batten instead of on the more fragile roof tiles.

By springy is meant that the plate element, when bent at the suitable angle, may be inserted without being substantially plastically deformed so as to be substantially surface parallel with the rest of the body from which it extends and that the spring force is so that the plate element springs back to its pre-bent position when it is free of the roof tile. The spring force K is adapted to avoid plastic deformation. The roof part is preferably a batten.

As the slit ends in an end curvature of a given radius of curvature, a notch effect is avoided so that the plate element is not wrenched from the bracket when a load is placed on the bracket.

According to the invention, the fourth side is provided with sharp, pointed or saw-toothed teeth.

It is thus obtained that the plate element is securely anchored to the subjacent batten.

In an advantageous embodiment of the invention, the two end curvatures of the slit ending in a first and a second area respectively on each their side of the first side of the plate element have a radius of curvature of 0.5-3 mm, preferably 0.5-1.5 mm.

A notch effect is hereby avoided when the plate element is bent at a suitable angle.

Since according to the invention, the first side is spaced from the two end curvatures of the slit towards the fourth side, the first side comprising a bend indicator, it is obtained that the plate element is bent precisely avoiding that it is bent at an insufficient angle or unevenly along the first side.

In an advantageous embodiment of the invention, the support part is made of the plate material and constitutes an integrated part of the body, the support part comprising at least one protruding part in relation to the longitudinal sides of the body, a bend line being provided between the body and the protruding part and the protruding part comprising a bore for receiving a holding device.

It is thus obtained that the surface of the support part, facing the body when bent, forms a substantially straight angle with the plane surface of the body. The surface of the support part itself extend parallel along the longitudinal axis of the body, thus making the design very strong even when using a relatively weak plate material, such as aluminium. This is due to the fact that a load placed on the bent part will have a line of attack parallel to the bend line, instead of perpendicular to the bend line as in the above-mentioned prior art solutions. As mentioned, this facilitates the choice of a light material, such as aluminium, making transportation of the snow catchers easier, aluminium moreover being a corrosion-resistant material. However, the protruding part may also be two fins positioned opposite each other. Through the holes in the fins a holding device, such as one or more pipes, is mounted. The pipes extend continuously through all the brackets mounted on the roof, thus providing a snow catcher. The pipes may also provide rungs, given that two brackets are placed on the same horizontal level and at a distance suitable for a rung of a ladder.

In an advantageous embodiment of the invention, the angle V is acute, preferably 20-30 degrees.

In an advantageous embodiment of the invention, the support part and the plane surface of the body facing each other form an angle Q, the angle Q preferably being 90-100 degrees, thus facilitating stacking of the brackets during transportation.

In an advantageous embodiment of the invention, the angle V is positioned between the first surface of the body and the plate element and the angle Q is positioned between the second surface of the body - positioned opposite the first surface - and the support part, the two angles facing in opposite direction.

In an advantageous embodiment of the invention, the plate material comprises an aluminium alloy.

In an advantageous embodiment of the invention, the connection between the plate element and the body is springy and comprises a spring force K.

In an advantageous embodiment of the invention, the abutment against the roof part comprises abutment between the roof part and the fourth side.

In an advantageous embodiment of the invention, the support part is adapted to receive a holding device, such as a pipe, a plate or a section.

The invention will be described in more detail below with reference to the drawings, in which:
Fig. 1 shows a bracket according to the invention ready to be inserted under a roof plate or tile,
Fig. 2 shows the bracket of Fig. 1 punched out in a plate material prior to bending the bracket to provide the protruding, springy fastening means and the raised support part,
Fig. 3A shows the bracket of Fig. 1 inserted under a roof plate or tile,
Fig. 3B shows the bracket of Fig. 3A in its end position, the springy plate element abutting a batten,
Fig. 3C shows the bracket of Fig. 3B in relation to a mass of snow lying on the roof,
Figs. 4A and B show a snow catcher according to the invention mounted on a roof, the roof tiles in Fig. 4A differing from the roof tiles in Fig. 4B,
Fig. 5A shows a bracket according to the invention for providing a rung on a roof,
Fig. 5B shows the bracket of Fig. 5A mounted on a roof, and
Fig. 6 shows a ladder on a roof made by means of a bracket according to the invention.

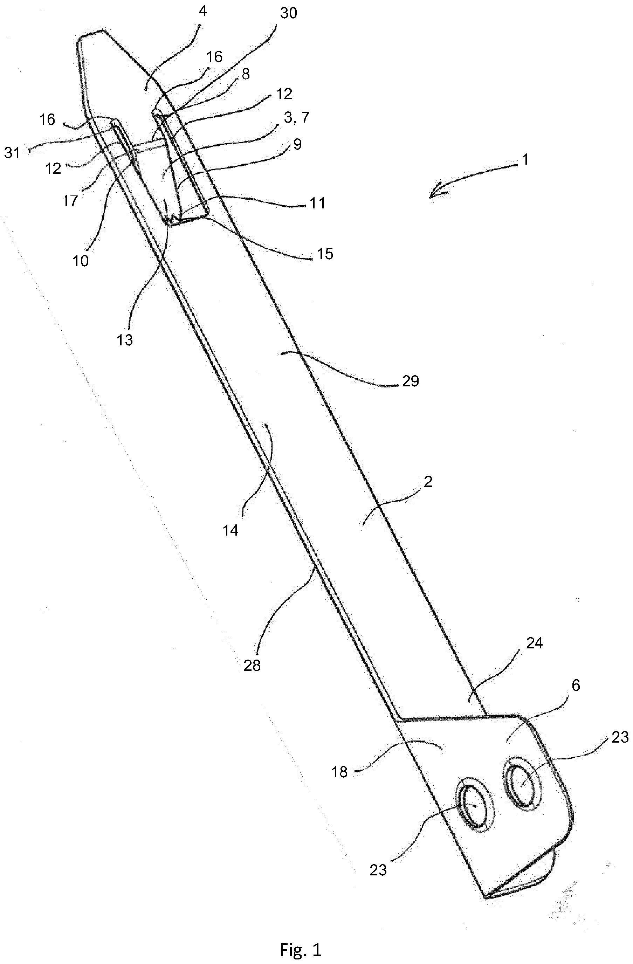

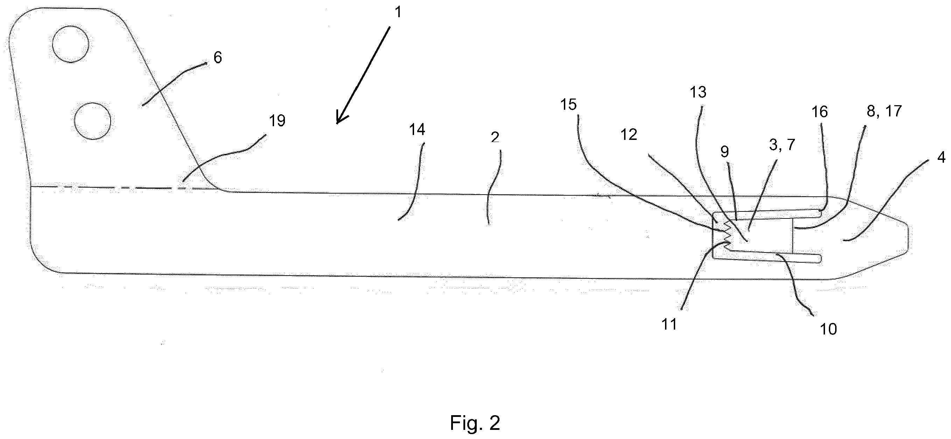

Figs. 1 and 2 show an embodiment of a bracket 1 according to the invention made of a plate material, e.g. made in an aluminium alloy, the thickness of which is typically 4-5 mm. The bracket 1 comprises an oblong body 2 formed of the plate material, one end 4 of the body being slightly tapering and fastening means 3 in the form of a substantially tongue-shaped plate element 7 protruding from the body 2 at a distance from the end point of the end 4, a slit 12 being cut or punched out detaching the plate element on three sides. The connection between the plate element 7 and the oblong body 2 is springy at a first side 8, where a bend indicator 17 is typically provided in the form of a groove. Two parallel sides, the second 9 and the third side 10, extend from the first side 8, the two sides ending and being connected at a fourth side 11, the fourth side typically comprising retention means 15, e.g. in the form of a saw-toothed edge. The mentioned second, third and fourth sides are defined by the slit 12.

The plate element 7 is thus a partially punched out part of the body 2 and is bent at an angle prior to use so that the surface 13 of the plate element 7 forms an angle of 20-30 degrees, preferably 25 degrees with one surface 14 of the body, the first surface 28. The slit 12 extends in a direction opposite the fourth side 11 and beyond the first side 8 indicated by the above-mentioned bend indicator 17. The slit 12 thus ends in a first 30 and a second area 31 on opposite sides of the first side 8 and at a distance of 2-4 mm from this. The bend indicator 17 ensures that the plate element 7 is not wrenched or bent unevenly, but precisely as indicated by the bend indicator or groove and without cracking the body 2 from which it extends. This is obtained by the extension of the slit 12 and by the slit ending in an end curvature 16 with a radius of curvature of more than 0 and typically 0.5-3 mm, preferably 0.5-1.5 mm. The width of the slit 12 is 1-3 mm, preferably 2 mm.

The end curvature 16 ends in a first 30 and a second area 31 on their respective side of the first side 8 of the plate element 7. There are thus two end curvatures 16 as the slit 12 is an unbroken slit surrounding the plate element 7.

Opposite the plate element 7 in the other end 24 of the body 2, a support part 6 is provided for mounting of a holding device 22. The support part 6 formed as a protruding part 18, which as mentioned is punched out of the plate material. Subsequently, the protruding part 18 is bent so that an angle of 90-100 degrees is formed between the plane surface of the protruding part and the other plane surface 14 of the body, i.e. the second surface 29. The protruding part 18 of the plate is bent so that its surface extends parallel to the longitudinal axis of the body 2, making the design very strong as a force applied to the protruding part will extend parallel to its bend line 19. The force is applied in connection with mounting of the bracket 1 on a roof 25. The protruding part 18 itself comprises one, two or possibly several bores 23 for receiving a holding device 22, e.g. in the form of pipes. The longitudinal axis of these pipes thus creates an angle of approximately 90 degrees with the longitudinal axis of the body 2.

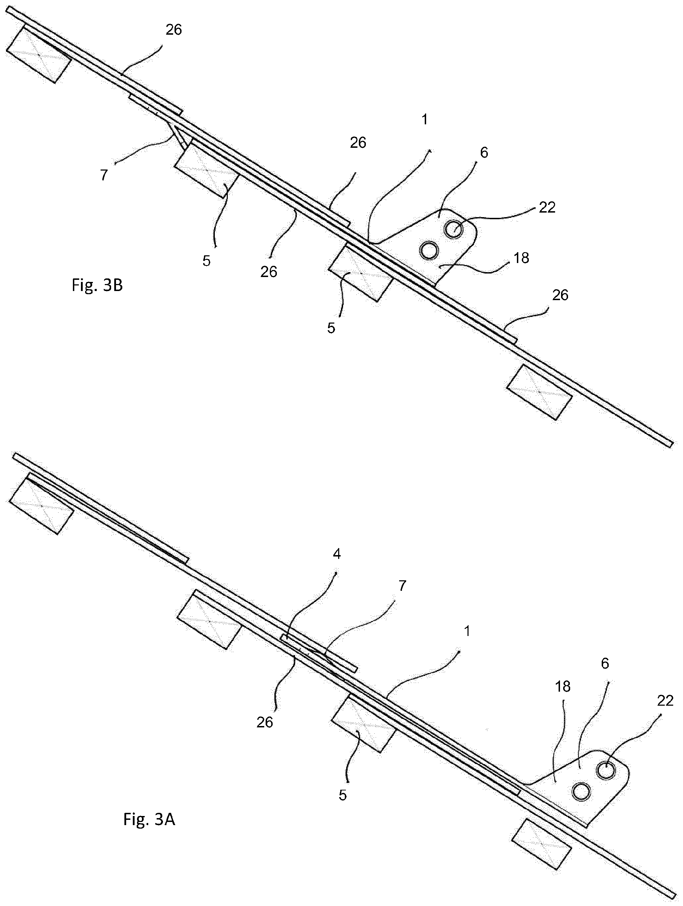

Figs. 3A-C show the bracket 1 being mounted on a roof 25, the springy plate element 7 being bent at the mentioned angle of approximately 25 degrees and the protruding part 18 being bent in the opposite direction of the springy part at an angle of 90-100 degrees. One end of the bracket 1 is inserted under a roof tile 26, the subjacent roof tile causing the springy part to be pushed upwards towards the superjacent roof tile, in effect lifting this to facilitate insertion. The angle between the body 2 and the plate element 7 is open in a direction opposite the direction of insertion.

Fig. 3B shows the bracket 1 in its end position, the plate element 7 springing back as soon as it is free of the subjacent roof tile 26. The bracket 1 is then drawn in a direction opposite the direction of insertion so that the fourth side 11 of the plate element 7, which as mentioned comprises retention means 15, penetrates the subjacent batten. The bracket 1 is thus mounted securely to the roof 25 and the force evenly distributed.

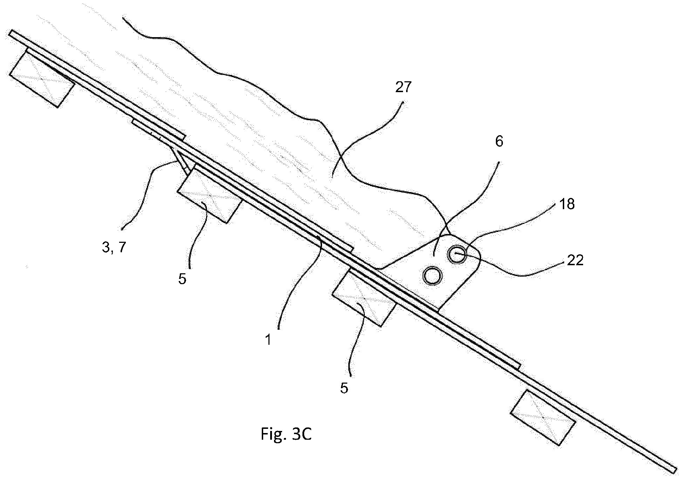

In Fig. 3C, the bracket 1 is shown providing a snow catcher retaining the snow 27 by means of a holding device 22 in form of the mentioned pipes provided in the bores 23 of the protruding part 18.

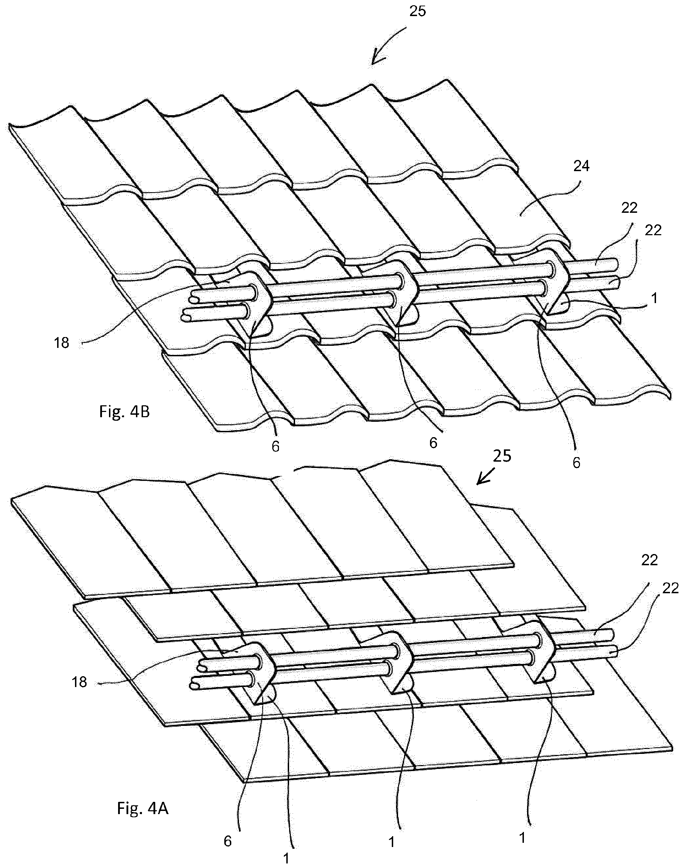

Figs. 4A and B show a set of brackets 1 mounted on a roof 25, the roof tiles 26 in Fig. 4A differing from the roof tiles 26 in Fig. 4B. In this case, the bracket 1 is used to provide a snow catcher and it shows that the bracket can be used regardless of the type of roof tiles 26 used as long as transverse battens into which the plate element 7 may engage to fasten the bracket securely are positioned under the roof tiles. The brackets 1 are of course mounted in the same row of roof tiles 26 to enable the holding device 22 in the form of pipes to be inserted through the bores 23 in the protruding parts 18 of each bracket. The bracket 1 is shown having only one protruding part 18, but might as well have two protruding parts positioned opposite each other, which would typically be the case for brackets mounted in the end areas of the roof 25, i.e. along its right and left edge.

The brackets 1 are typically mounted by bending the plate element 7 constituting the fastening means 23 to an angle of approximately 25 degrees along the pre-stamped groove or bend indicator 17, which is approximately 15-30 mm long depending on the roof type. The bracket 1 is inserted upwards between the roof tiles 26 after which it springs back to its pre-bent position and anchors itself to the batten. Subsequently, a holding device 22 in the form of one or two pipes extending though the brackets 1 are mounted and secured by the protruding parts 18 or pipe holders. As mentioned, brackets 1 with double pipe holders are mounted along the end edges of the roof 25, whereas brackets with a pipe holder to the right or left are mounted in the middle of the roof so that movement to the side is prevented. The pipes are fastened to the bracket 1 by means of machine screws. To correspond with the chosen dimension, 5 mm machine screws are preferably used. Thus, a snow catcher is provided which is simple in design, light and easy to mount.

Fig. 5A shows the bracket 1 according to the invention for providing rungs on a roof 25 and Fig. 5B shows the rung of Fig. 5A mounted on a roof. Two brackets 1 are positioned at the same horizontal level on a roof 25 and at a distance suitable for a step, i.e. approximately 30-40 cm. Through the two bores 23 of two the bent protruding parts 18 a holding device 22 in the form of a plate 33 functioning as a rung is fastened. The plate 33 is fastened to the protruding parts 18 using holding means 32, in this case in the form of cylindrical protruding parts fitting into the bores 23 of the protruding parts. A rung is thus provided, which may be mounted on the roof 25 as shown in Fig. 5B. The fourth sides 11 of the plate elements 7 of the brackets 1 penetrate the same batten with their retention means 15. The body 2 is thus positioned on the top face of the roof 25 helping to distribute the pressure, while the retention means 15 ensure that the rung does not slide in relation to the sloping roof.

Fig. 6 shows rungs provided as shown in figs. 5A and 5B, the rungs in the form of plates 33 being placed on the same vertical level, thus constituting a ladder 20. However, the rungs may also be provided by pipes inserted through the bores 23 of the protruding parts 18 and in effect be fastened in a similar manner as pipes used to provide a snow catcher as described above. The distance between the rungs is in the region of 20-40 cm depending on the slope of the roof 25 and the distance between the subjacent battens. The greater the load on the brackets 1, the more they will penetrate the subjacent batten.

The brackets 1 are typically mounted as described above. The shape of the holding device 22 is adapted to fit the required function. In case a bracket 1 is to be used for mounting a solar cell, the holding device 22 may e.g. be provided with supporting sections to be fastened both in the bore 23 of the protruding part 18 and to the solar cell in a suitable manner.

### List of reference numbers

1. bracket
2. body
3. fastening means
4. one end of the body
5. roof part
6. support part
7. plate element
8. first side
9. second side
10. third side
11. fourth side
12. slit
13. plane surface of the plate element
14. plane surface of the body
15. retention means
16. end curvature
17. bend indicator
18. protruding part
19. bend line
20. ladder
21. -
22. holding device
23. bore
24. other end of the body
25. roof
26. roof tile
27. snow
28. first surface
29. second surface
30. first area
31. second area
32. holding means
33. plate (rung)

## Claims

1. Bracket (1) made of a plate material for mounting on a roof comprising a body (2) with a fastening means (3) in one end of the body (2) for fastening the bracket (1) to a roof part (5) and a support part (6) in an opposite end of the body (2), the fastening means (3) comprising a plate element (7), the plate element (7) being an integrated part of the body (2) and connected to the body (2) along a first side (8) of the plate element (7), the connection between the plate element (7) and the body (2) being springy, the width of the first side (8) being smaller than the width of the body (2), the plate element (7) further comprising a second side (9) and a third side (10) both extending from the first side (8) as well as a fourth side (11) opposite the first side (8) connecting the second side (9) and the third side (10), a slit (12) being provided between the second, third and fourth sides and the body so that the three sides are not connected with the body (2), and so that the plate element is substantially tongue-shaped, **characterised in that** the first side (8) comprises a bend indicator (17), **in that** the slit (12) ends in a first (30) and a second area (31) on opposite sides of the first side (8) and at a distance from said bend indicator (17) each end of the slit having an end curvature (16), the end curvature having a radius of curvature of more than 0, and **in that** the plate element (7) is bent along the bend indicator (17) to form an angle V with the plane surface (14) of the body , the angle V opening towards the support part (6), and the part of the plate element extending between the bend indicator (17) and the ends of the slit (12) remains substantially parallel to the body, wherein the fourth side (11) is provided with sharp, pointed or saw-toothed teeth.

2. Bracket (1) according to claim 1 **wherein** the two end curvatures (16) of the slit (12) ending in a first (30) and a second area (31) respectively on each their side of the first side (8) of the plate element (7) have a of curvature of radius of 0,5-3 mm, preferably 0,5-1,5 mm.

3. Bracket (1) according to any of the preceding claims **wherein** the first side (8) is spaced from the two end curvatures (16) of the slit (12) towards the fourth side (11), the first side (8) comprising a bend indicator (17).

4. Bracket (1) according to any of the preceding claims **wherein** the support part (6) is formed of the plate material and constitutes an integrated part of the body (2), the support part (6) comprising at least one protruding part (18) in relation to the longitudinal sides of the body, a bend line (19) being provided between the body (2) and the protruding part (18) and the protruding part (18) comprising a bore (22) for receiving a holding device (22).

5. Bracket (1) according to claim 4 **wherein** the holding device (22) comprises a snow catching means, preferably at least one rod extending transversely to the longitudinal axis of the body and being mounted in the bores (23) of the support part (6).

6. Bracket (1) according to claim 4 **wherein** the holding device (22) provides a rung comprising holding means adapted to be received in the bores of the support part.

7. Bracket (1) according to any of the preceding claims **wherein** the angle V is acute, preferably 20-30 degrees.

8. Bracket (1) according to any of the preceding claims **wherein** the surface of the support part (6) and the plate body facing each other form an angle Q, the angle Q preferably being 90-100 degrees.

9. Bracket (1) according to any of the preceding claims **wherein** the angle V is positioned between the first surface (28) of the body and the plate element (7) and the angle Q is positioned between the second surface (29) of the body - positioned opposite the first surface (28) - and the support part (6), the two angles facing in opposite direction.

10. Bracket (1) according to any of the preceding claims **wherein** the connection between the plate element (7) and the body (2) is springy and comprises a spring force K.

11. Bracket (1) according to any of the preceding claims **wherein** the abutment against the roof part (5) comprises abutment between the roof part (5) and the fourth side (11).

12. Bracket (1) according to any of the preceding claims **wherein** the support part (6) is adapted to receive a holding device (22), such as a pipe, a plate or a section.

## Patentansprüche

1. Halterung (1) gefertigt aus Plattenmaterial zur Befestigung auf einem Dach, umfassend einen Körper (2) mit einem Befestigungsmittel (3) an einem Ende des Körpers (2) zur Befestigung der Halterung (1) an einem Dachteil (5) und einem Supportteil (6) an einem gegenüberliegenden Ende des Körpers (2), wobei das Befestigungsmittel (3) ein Plattenelement (7) umfasst, wobei das Plattenelement (7) ein integraler Teil des Körpers (2) ist und mit dem Körper (2) entlang einer ersten Seite (8) des Plattenelements (7) verbunden ist, wobei die Verbindung zwischen dem Plattenelement (7) und dem Körper (2) elastisch ist, die Breite der ersten Seite (8) schmaler als die Breite des Körpers (2) ist, wobei das Plattenelement (7) ferner eine zweite Seite (9) und eine dritte Seite (10) umfasst, die sich beide von der ersten Seite (8) und einer vierten Seite (11), gegenüber der ersten Seite (8), erstrecken, wobei sie die zweite Seite (9) mit der dritten Seite (10) verbinden, einen Schlitz (12), der zwischen der zweiten, dritten und vierten Seite und dem Körper bereitgestellt wird, so dass die drei Seiten nicht mit dem Körper (2) verbunden sind, und so dass das Plattenelement im Wesentlichen zungenförmig ist, dadurch charakterisiert, dass die erste Seite (8) einen Beuge-Indikator (17) umfasst, in dem der Schlitz (12) in einem ersten (30) und einem zweiten (31) Bereich auf gegenüberliegenden Seiten der ersten Seite (8) endet und mit einer Distanz von jenem Beuge-Indikator (17), wobei jedes Ende des Schlitzes eine Endkrümmung (16) hat, wobei die Endkrümmung einen Krümmungsradius von mehr als 0 hat und in der das Plattenelement (7) entlang des Beuge-Indikators gebogen wird, um einen Winkel V mit der ebenen Oberfläche (14) des Körpers zu bilden, wobei der Winkel V sich in Richtung des Supportteils (6) öffnet und wobei sich der Teil des Plattenelements, der sich zwischen dem Beuge-Indikator (17) und den Enden des Schlitzes (12) ausbreitet, im Wesentlichen parallel zum Körper bleibt, wobei die vierte Seite (11) mit scharfen, zugespitzten oder Sägezahn-Zähnen ausgestattet ist.

2. Die Halterung (1) nach Anspruch 1, die zwei Endkrümmungen (16) des Spalts (12), die in einem ersten (30) und einem zweiten Bereich (31) auf jeweils ihrer Seite der ersten Seite (8) des Plattenelements (7) enden, eine Krümmung mit einem Radius von 0,5 bis 3 mm, bevorzugt von 0,5 bis 1,5 mm haben.

3. Die Halterung (1) nach einem der vorhergehenden Ansprüche, wobei die erste Seite (8) von den zwei Endkrümmungen (16) des Spalts (12) in Richtung der vierten Seite (11) getrennt ist, wobei die erste Seite (8) einen Beuge-Indikator (17) umfasst.

4. Die Halterung (1) nach einem der vorhergehenden Ansprüche, wobei der Supportteil (6) aus dem Plattenmaterial geformt ist und aus einem integralen Teil des Körpers (2) besteht, wobei der Supportteil (6) mindestens einen hervorstehenden Teil (18) in Bezug auf die lange Seite des Körpers, eine Beugelinie (19), die zwischen dem Körper (2) und dem hervorstehenden Teil (18) bereitgestellt wird, und den hervorstehenden Teil (18) umfasst, der ein Bohrloch (22) zum Empfangen einer Haltevorrichtung (22) umfasst.

5. Die Halterung (1) nach Anspruch 4, wobei die Haltevorrichtung (22) ein Schneefangmittel umfasst, bevorzugt mindestens eine Stange, die sich transvers zur longitudinalen Achse des Körpers ausbreitet und die in den Bohrlöchern (23) des Supportteils (6) befestigt ist.

6. Die Halterung (1) nach Anspruch 4, wobei die Haltevorrichtung (22) eine Stufe bereitstellt, umfassend ein Haltemittel adaptiert um, in den Bohrlöchern des Supportteils empfangen zu werden.

7. Die Halterung (1) nach einem der vorhergehenden Ansprüche, wobei der Winkel V spitz ist, bevorzugt 20-30 Grad.

8. Die Halterung (1) nach einem der vorhergehenden Ansprüche, wobei die Oberfläche des Supportteils (6) und der Plattenkörper, die sich gegenüberliegen, einen Winkel Q bilden, wobei der Winkel Q bevorzugt 90-100 Grad hat.

9. Die Halterung (1) nach einem der vorhergehenden Ansprüche, wobei der Winkel V zwischen der ersten Oberfläche (28) des Körpers und dem Plattenelement (7) positioniert ist und der Winkel Q zwischen der zweiten Oberfläche (29) des Körpers - positioniert gegenüber der ersten Oberfläche (28) - und dem Supportteil (6) positioniert ist, wobei die beiden Winkel in gegenüberliegende Richtungen weisen.

10. Die Halterung (1) nach einem der vorhergehenden Ansprüche, wobei die Verbindung zwischen dem Plattenelement (7) und dem Körper (2) elastisch ist und eine Federkraft K umfasst.

11. Die Halterung (1) nach einem der vorhergehenden Ansprüche, wobei das Anstoßen am Dachteil (5) ein Anstoßen zwischen dem Dachteil (5) und der vierten Seite (11) umfasst.

12. Die Halterung (1) nach einem der vorhergehenden Ansprüche, wobei der Supportteil (6) adaptiert ist, um eine Haltevorrichtung (22) zu empfangen, wie ein Rohr, eine Platte oder einen Abschnitt.

## Revendications

1. Support (1) réalisé avec un matériau de plaque destiné à être monté sur un toit, comprenant un corps (2) avec un moyen de fixation (3) dans une extrémité du corps (2) pour fixer le support (1) sur une partie de toit (5) et une partie de support (6) dans une extrémité opposée du corps (2), le moyen de fixation (3) comprenant un élément de plaque (7), l'élément de plaque (7) faisant partie intégrante du corps (2) et étant raccordé au corps (2) le long d'un premier côté (8) de l'élément de plaque (7), le raccordement entre l'élément de plaque (7) et le corps (2) étant élastique, la largeur du premier côté (8) étant inférieure à la largeur du corps (2), l'élément de plaque (7) comprenant en outre un deuxième côté (9) et un troisième côté (10) s'étendant tous deux à partir du premier côté (8), ainsi qu'un quatrième côté (11) opposé au premier côté (8) raccordant le deuxième côté (9) et le troisième côté (10), une fente (12) étant prévue entre les deuxième, troisième et quatrième côtés, et le corps, de sorte que les trois côtés ne sont pas raccordés avec le corps (2), et de sorte que l'élément de plaque est sensiblement en forme de languette, **caractérisé en ce que** le premier côté (8) comprend un indicateur de flexion (17), **en ce que** la fente (12) se termine par une première (30) et une seconde zone (31) sur les côtés opposés du premier côté (8) et à une distance dudit indicateur de flexion (17), chaque extrémité de la fente ayant une courbure d'extrémité (16), la courbure d'extrémité ayant un rayon de courbure supérieur à 0, et **en ce que** l'élément de plaque (7) est plié le long de l'indicateur de flexion (17) afin de former un angle V avec la surface de plan (14) du corps, l'angle V s'ouvrant vers la partie de support (6), et la partie de l'élément de plaque s'étendant entre l'indicateur de flexion (17) et les extrémités de la fente (12) reste sensiblement parallèle au corps, dans lequel le quatrième côté (11) est prévu avec des dents tranchantes, pointues ou en dents de scie.

2. Support (1) selon la revendication 1, dans lequel les deux courbures d'extrémité (16) de la fente (12) se terminant par une première (30) et une seconde zone (31) respectivement sur chacun de leur côté du premier côté (8) de l'élément de plaque (7) ont une courbure de rayon de 0,5 à 3 mm, de préférence de 0,5 à 1,5 mm.

3. Support (1) selon l'une quelconque des revendications précédentes, dans lequel le premier côté (8) est espacé des deux courbures d'extrémité (16) de la fente (12) vers le quatrième côté (11), le premier côté (8) comprenant un indicateur de flexion (17).

4. Support (1) selon l'une quelconque des revendications précédentes, dans lequel la partie de support (6) est formée avec un matériau de plaque et fait partie intégrante du corps (2), la partie de support (6) comprenant au moins une partie en saillie (18) par rapport aux côtés longitudinaux du corps, une ligne de flexion (19) étant prévue entre le corps (2) et la partie en saillie (18) et la partie en saillie (18) comprenant un alésage (22) pour recevoir un dispositif de maintien (22).

5. Support (1) selon la revendication 4, dans lequel le dispositif de maintien (22) comprend des moyens de retenue de neige, de préférence au moins une tige s'étendant transversalement par rapport à l'axe longitudinal du corps et étant montée dans les alésages (23) de la partie de support (6).

6. Support (1) selon la revendication 4, dans lequel le dispositif de maintien (22) fournit un échelon comprenant un moyen de maintien adapté pour être reçu dans les alésages de la partie de support.

7. Support (1) selon l'une quelconque des revendications précédentes, dans lequel l'angle V est aigu, de préférence de 20 à 30 degrés.

8. Support (1) selon l'une quelconque des revendications précédentes, dans lequel la surface de la partie de support (6) et le corps de plaque se faisant face forment un angle Q, l'angle Q étant de préférence de 90 à 100 degrés.

9. Support (1) selon l'une quelconque des revendications précédentes, dans lequel l'angle V est positionné entre la première surface (28) du corps et l'élément de plaque (7) et l'angle Q est positionné entre la seconde surface (29) du corps - positionnée à l'opposé de la première surface (28) - et la partie de la support (6), les deux angles se faisant face dans la direction opposée.

10. Support (1) selon l'une quelconque des revendications précédentes, dans lequel le raccordement entre l'élément de plaque (7) et le corps (2) est élastique et comprend une force de rappel K.

11. Support (1) selon l'une quelconque des revendications précédentes, dans lequel la butée contre la partie de toit (5) comprend une butée entre la partie de toit (5) et le quatrième côté (11).

12. Support (1) selon l'une quelconque des revendications précédentes, dans lequel la partie de support (6) est adaptée pour recevoir un élément de maintien (22), tel qu'un tuyau, une plaque ou une section.
